# EUROPÄISCHE PATENTSCHRIFT

(11) **EP 1 532 510 B1**
(45) Veröffentlichungstag und Bekanntmachung des Hinweises auf die Patenterteilung: **21.05.2014**
(21) Anmeldenummer: 03797204.9
(22) Anmeldetag: 23.07.2003
(51) Int. Cl.: G06F 21/57, G06F 21/79

(54) **VERFAHREN ZUM SCHUTZ VOR MANIPULATIONEN AN EINEM STEUERGERÄT FÜR MINDESTENS EINE Kfz-KOMPONENTE**
METHOD FOR PROTECTING AGAINST MANIPULATION OF A CONTROLLER FOR AT LEAST ONE MOTOR VEHICLE COMPONENT
PROCEDE DE PROTECTION CONTRE DES MANIPULATIONS EFFECTUEES SUR UN APPAREIL DE COMMANDE D'AU MOINS UN CONSTITUANT DE VEHICULE

(30) Priorität: 21.08.2002 DE 10238095
(43) Veröffentlichungstag der Anmeldung: 25.05.2005
(73) Patentinhaber: AUDI AG, 85045 Ingolstadt (DE)
(72) Erfinder: FEILEN, Oliver, 85101 Lenting (DE); STADTMÜLLER, Rüdiger, 85055 Ingolstadt-Etting (DE)
(86) Internationale Anmeldenummer: PCT/EP2003/008022
(87) Internationale Veröffentlichungsnummer: WO 2004/027586

(56) Entgegenhaltungen:
- EP-A- 1 197 826
- WO-A-00/26791

## Beschreibung

Die vorliegende Erfindung betrifft ein Verfahren zum Schutz vor Manipulationen an einem Steuergerät für mindestens eine Kfz-Komponente und ein Steuergerät, in dem dieses Verfahren realisiert ist.

In Kraftfahrzeugen werden heutzutage zur Steuerung einzelner Kfz-Komponenten Steuergeräte verwendet, wie beispielsweise das Motorsteuergerät oder das Getriebesteuergerät. Die zum Betrieb von solchen Steuergeräten erforderlichen Informationen, wie beispielsweise Programme und Daten, werden verschlüsselt oder unverschlüsselt in Speicherbausteinen (E²PROM, Flash und dergleichen) abgelegt. Das Verschlüsselungsverfahren ist dabei unabhängig von einer festen Hardware-Kombination von Bausteinen und in der Regel in einem wiederbeschreibbaren Speichermedium abgelegt.

Der Nachteil solcher Steuergeräte und der verwendeten Programme besteht darin, dass einzelne Speicherbausteine ausgetauscht werden können, bzw. die Daten auf den Speicherbausteinen über eine Diagnoseschnittstelle oder über direkten Zugriff auf den Speicherbaustein überschrieben werden können. Der Austausch eines Speicherbausteins oder das Überschreiben der auf diesem Speicherbaustein gespeicherten Daten und Programme kann, dazu führen, dass die Kfz-Komponente mit anderen Kenndaten arbeitet. Dies wird beispielsweise bei dem sogenannten Chip-Tuning durchgeführt, bei dem Speicherbausteine, die dem Motorsteuergerät zugeordnet sind, ausgetauscht bzw. die auf diesen Speicherbausteinen gespeicherten Programme und Daten, wie Kenndaten, geändert werden. Dadurch kann beispielsweise eine Erhöhung der Leistung oder des Drehmoments des Motors erzielt werden. Wird diese Manipulation durchgeführt ohne die weiteren Kfz-Komponenten, wie zum Beispiel Turbolader, Ölkühler oder Bremsen anzupassen, so kann es zu Schäden an diesen Kfz-Komponenten und sicherheitskritischen Zuständen kommen.

Die EP 1 197 826 A1 beschreibt ein Verfahren zum Erhöhen der Fälschungssicherheit einer Speicherkarte. Auf der Speicherkarte sind ein Microrechner und ein Speicherbaustein angeordnet. In dem als Festwertspeicher ausgebildeten Speicherbaustein werden Daten verschlüsselt abgelegt. Ein eindeutiger Codierschlüssel zum Verschlüsseln der Daten ist in einem Speicherbaustein des Microrechners abgelegt. In dem Speicherbaustein wird auch ein Zertifizierungsschlüssel des Microrechners abgelegt, welcher mit dem Codierschlüssel verschlüsselt wurde. Zum Überprüfen von Manipulationen an der Speicherkarte werden die verschlüsselten Daten aus dem Speicherbaustein ausgelesen. Die ausgelesenen Daten werden mit dem Codierschlüssel entschlüsselt, ebenso wie der Zertifizierungsschlüssel. Bei Übereinstimmung des aus dem Speicherbaustein ausgelesenen decodierten Zertifizierungsschlüssel mit dem in dem Speicherbaustein gespeicherten Zertifizierungsschlüssel wird darauf geschlossen, dass keine Manipulation an dem Microrechner oder an dem Speicherbaustein vorgenommen wurde.

Die US 6 378 072 B1 beschreibt ein Verfahren zum Verschlüsseln und Entschlüsseln von Daten mittels eines asymmetrischen Verfahrens. Hierbei wird also ein öffentlicher Schlüssel zum Verschlüsseln verwendet und ein geheim gehaltener, privater Schlüssel zum Entschlüsseln.

Aufgabe der vorliegenden Erfindung ist es daher, ein Verfahren zum Schutz vor Manipulation an einem Steuergerät zu schaffen, bei dem ein Austausch eines Speicherbausteins und die Änderung der Daten auf dem Speicherbaustein nicht möglich ist, ohne die Funktionsfähigkeit des Steuergeräts zu beeinflussen oder zumindest die Veränderung zu diagnostizieren und diese ggf. zur Anzeige zu bringen.

Die Aufgabe wird gelöst durch den unabhängigen Anspruch.

Die Erfindung wird im Folgenden anhand der beiliegenden Zeichnungen, die sich auf mögliche Ausführungsbeispiele der Erfindung beziehen, beschrieben. Es zeigen:
Figur 1 und 1a: Flußdiagramme, die den Verlauf einer Ausführungsform des Verfahrens schematisch wiedergeben;
Figur 2: eine schematische Blockdarstellung einer Ausführungsform eines Steuergeräts zum Ausführen des erfindungsgemäßen Verfahrens; und
Figur 3: eine schematische Blockdarstellung einer weiteren Ausführungsform eines Steuergeräts zum Ausführen des erfindungsgemäßen Verfahrens.

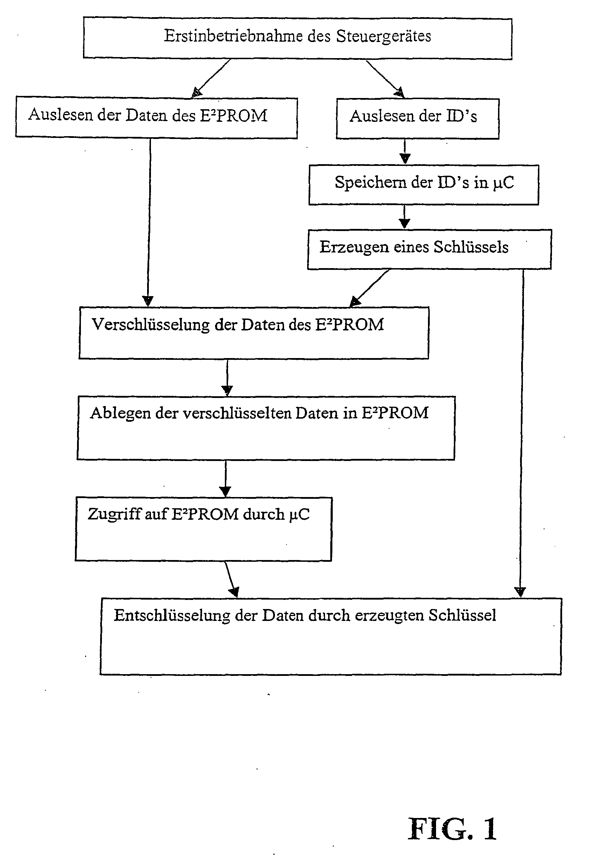

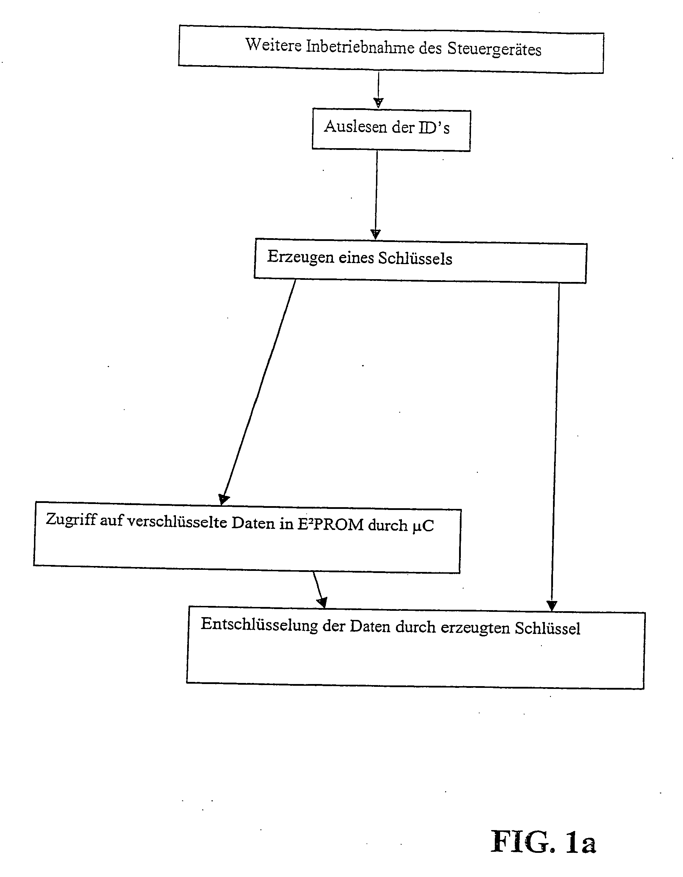

In Figur 1 ist der Ablauf des erfindungsgemäßen Verfahrens schematisch in einem Flußdiagramm angedeutet und wird im folgenden erläutert.

Bei der ersten Inbetriebnahme eines Steuergeräts werden die Daten, die in dem E²PROM, das dem Microrechner zugeordnet ist, oder in diesem integriert ist, abgelegt sind, ausgelesen. Parallel oder zeitlich versetzt werden Kennungen, nämlich zumindest die Identifikationsnummer des Microrechners sowie ergänzend die Identifikationsnummern weiterer Speicherbausteine, ausgelesen und aus diesen ein Schlüssel gebildet. Mittels dieses Schlüssels werden dann die aus dem E²PROM ausgelesenen Daten verschlüsselt und in dieser verschlüsselten Form in dem E²PROM wieder abgelegt. Im Anschluß daran werden, sobald der Microcomputer auf die Daten des E²PROMs zugreift, diese Daten durch den ursprünglich gebildeten Schlüssel entschlüsselt. Dadurch kann das Steuergerät mit den in dem E²PROM gespeicherten Daten, beispielsweise Adaptionswerte und Anpassungswerte bei einem Motorsteuergerät, vorschriftsgemäß funktionieren.

Bei einer weiteren Betätigung und jeder danach folgenden Betätigung des Steuergeräts werden erneut zumindest ein Teil der Kennungen zumindest eines Bausteins des Steuergeräts, nämlich des Microrechners, ausgelesen und ein Schlüssel aus diesen Kennungen oder einem Teil dieser Kennungen erzeugt. Erfolgt im Anschluss daran ein Zugriff auf die in dem E²PROM abgelegten Daten, die mittels des ursprünglichen Schlüssels verschlüsselt wurden, so werden bei Identität der dem Microrechner zugeordneten Speicherbausteine und des E²PROMS die verschlüsselten Daten durch den neu erneut erzeugten Schlüssel entschlüsselt und können in dem Microrechner zur Steuerung der zugeordneten Kfz-Komponente verwendet werden. Wurde hingegen einer der Bausteine ausgetauscht, so stimmt der von dem Microrechner erzeugte Schlüssel zum Entschlüsseln nicht mit der Verschlüsselung überein und auf die auf dem E²PROM abgelegten Daten kann nicht korrekt zugegriffen werden.

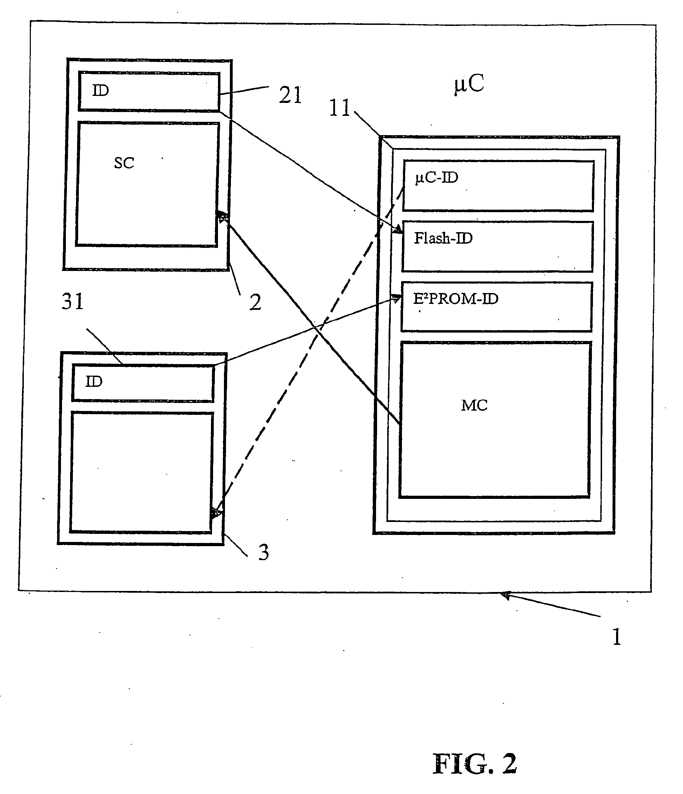

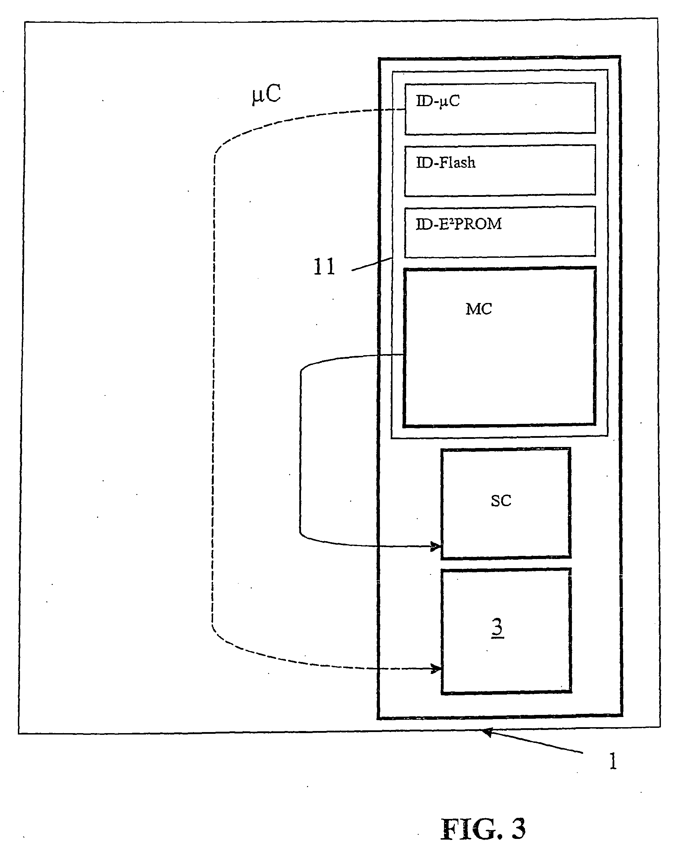

Weitere Ausführungsformen des erfindungsgemäßen Verfahrens werden unter Bezugnahme auf die Figuren 2 und 3 beschrieben.

In Figur 2 ist eine Ausführungsform eines Steuergeräts dargestellt. Der Aufbau von Steuergeräten, wie beispielsweise Motorsteuergeräten, ist hinlänglich aus dem Stand der Technik bekannt, so dass hierauf nur insoweit eingegangen wird, wie dies für das Verständnis der Erfindung erforderlich ist. Das Steuergerät 1 umfasst in der dargestellten Ausführungsform einen Microcomputer µC, einen Flash-Speicher 2 und einen EEPROM (E²PROM) 3. Der Flash-Speicher 2 und der E²PROM 3 weisen jeweils einen OTP-Bereich 21, 31 auf. Diese sind vorzugsweise nicht lesegeschützt ausgestaltet. Auch in dem µC ist ein OTP-Bereich 11 vorgesehen.

Die Speicherbausteine Flash 2, E²PROM 3 sind in der dargestellten Ausführungsform mit bausteinindividuellen Identifikationsnummern ID versehen. Diese werden in der Regel beim Hersteller des Bausteins geschrieben und in den OTP-Bereich 21, 31 der einzelnen Bausteine abgelegt.

Im Herstellungsprozess des Steuergeräts werden bei der Erstinbetriebnahme des Steuergeräts von dem Microrechner µC die ID's der einzelnen Speicherbausteine 2, 3 ausgelesen und in einen einmalig beschreibbaren OTP-Bereich 11 des µC abgelegt. Ab diesem Zeitpunkt ist die Funktion des Steuergeräts 1 nur in Verbindung mit den dem µC bekannten ID's der externen Speicherbausteine 2, 3 möglich.

Bei jeder weiteren Inbetriebnahme des Steuergeräts 1 wird von dem µC die ID aller mit diesem verbundenen Speicherbausteine 2, 3 erneut ausgelesen. In einer Vergleichseinheit können dann diese aktuellen ID's mit den ursprünglichen Kennungen, die in dem OTP-Bereich 11 des µC abgelegt sind, verglichen werden. Wird bei diesem Vergleich festgestellt, dass eine der ID's nicht mit einer der ursprünglichen ID's übereinstimmt, so wird das Steuergerät an seiner Funktion gehindert oder zumindest die Veränderung diagnostiziert und diese ggf. zur Anzeige gebracht.

Der Code zum Betreiben des Steuergeräts ist in einen Master-Code (MC) und einen Sub-Code (SC) unterteilt. Der Mastercode MC enthält elementare, essentielle Funktionalitäten zum Betrieb des Steuergeräts, z.B. das Programm zur Signalerzeugung für an das Steuergerät angeschlossene Aktuatoren (nicht dargestellt) oder das Programm für die Berechnung der Stellgrößen und Stellwerte. Der Mastercode MC kann weiterhin Daten umfassen. In dem Sub-Code SC sind weitere Programme und Daten enthalten. Das Steuergerät ist nur funktionsfähig unter Verwendung beider Codes MC und SC. In der dargestellten Ausführungsform ist der Sub-Code SC in einem wiederbeschreibbaren Bereich des Flash-Speichers 2 enthalten. Der Master-Code MC ist in einem OTP-Bereich 11 des Microrechners µC enthalten. Der Master-Code ist vorzugsweise gegen Auslesen über Kontaktierung geschützt. Dies kann beispielsweise physikalisch durch Durchlegieren einer Transistorstrecke oder schaltungstechnisch erzielt werden. Der Sub-Code SC kann im Gegensatz zu dem Master-Code MC modifiziert beziehungsweise überschrieben werden. Dies erlaubt ein Updaten des Subcodes oder ein Reprogrammieren.

Der µC weist weiterhin eine Identifikationsnummer µC-ID auf. Auch diese ist in einem lesegeschützten OTP-Bereich des µC abgelegt. In dem E²PROM sind weitere Daten für den Betrieb des Steuergeräts in einem wiederbeschreibbaren Bereich abgelegt. Diese Daten können beispielsweise Adaptionswerte sowie Leerlaufdrehzahlen sein.

Beim Initialisieren des Steuergeräts lernt der Microrechner µC die in dem OTP-Bereich 21, 31 der Speicherbausteine 2, 3 abgelegten und dadurch nicht veränderbaren Identifikationsnummern an und legt diese in einem OTP-Bereich des Microrechners µC, der optional auch lesegeschützt ausgestaltet sein kann, ab.

Von diesem Zeitpunkt an sind dem Microrechner µC die mit diesem verbundenen Speicherbausteine 2, 3 über ihre ID bekannt.

Zusätzlich können die in dem Microrechner abgelegten ID's der Speicherbausteine auch zur Verschlüsselung von Daten oder Programmen dienen. So können die auf dem E²PROM abgelegten Daten beispielsweise durch ein symmetrisches Verschlüsselungsverfahren codiert werden, in dem der Schlüssel zumindest einen Teil der ID zumindest eines der Speicherbausteine 2, 3 umfasst. Bei einem Motorsteuergerät können in dem E²PROM beispielsweise Kennfelder, wie , Lernwerte, Fertigungsdaten und Anpassungswerte, gespeichert sein. Zur Verschlüsselung sind grundsätzlich alle symmetrischen Verschlüsselungsverfahren geeignet, die die Einbeziehung eines steuergeräteindividuellen Kennzeichnens erlauben. Vorzugsweise werden die Daten des E²PROM durch einen Schlüssel verschlüsselt, der zusätzlich zu der ID der externen Speicherbausteine die ID des Microrechners µC umfasst. Hierdurch wird eine steuergeräteindividuelle Verschlüsselung erzielt, die ein Austauschen des E²PROMs oder ein Überschreiben der darauf gespeicherten Daten unmöglich macht bzw. den Betrieb des Steuergeräts nach einer solchen Manipulation verhindert. Der Schlüssel wird vorzugsweise in dem RAM-Speicher des Microrechners µC abgelegt. Dadurch wird der Schlüssel bei jedem Hochlaufen des Steuergeräts unter Einbeziehung eines steuergeräteindividuellen Kennzeichens (z.B. der ID des µC und gegebenenfalls der ID's der Speicherbausteine) gebildet und ist somit steuergeräteindividuell.

Weiterhin kann der Subcode SC auf dem Flash-Speicher 2 ganz oder teilweise verschlüsselt abgelegt sein. Auch für diese Verschlüsselung kann die ID der einzelnen Speicherbausteine oder des Microrechners bzw. ein Teil dieser ID in den Schlüssel integriert werden. Die Entschlüsselung der Daten in dem Sub-Code wird durch den Master-Code durchgeführt. Da dieser in einem lesegeschützten Bereich des Microrechners abgelegt ist, kann ein Auslesen des Programms und damit eine Vervielfältigung der Software verhindert werden.

Die Überwachung des Sub-Codes gegenüber Manipulation, die durch den µC im Master-Code sichergestellt wird, kann auch über andere Verfahren als die Verschlüsselung erfolgen. So können zusätzlich oder alternativ lineare/CRC-Checksummenbildung oder Hash-Wertbildung verwendet werden. Zur Erkennung einer vorgenommenen Manipulation der Daten und gegebenenfalls Teile des Subcodes werden z.B. über ausgewählte Bereiche lineare Checksummen gebildet und das Ergebnis verschlüsselt als Fingerprint in den Sub-Code eingebracht. Der Mastercode berechnet im Steuergerätebetrieb, beispielsweise bei einem Signal an Klemme 15, über den gleichen vordefinierten Bereich den Vergleichswert (z.B. lineare Checksumme) und prüft diesen gegen den entschlüsselten im Sub-Code verschlüsselt abgelegten Referenzwert. Die Art der Manipulationserkennung kann beliebig gewählt werden.

Nach der Erkennung einer Manipulation werden vom Master-Code Maßnahmen eingeleitet, die gegebenenfalls zum Steuergeräteausfall führen.

In Figur 3 ist eine weitere Ausführungsform des Steuergeräts zum Ausführen des erfindungsgemäßen Verfahrens gezeigt.

Bei dieser Ausführungsform sind die Speicherbausteine 2 und 3 in den Microrechner µC integriert. Der µC weist hierbei einen embedded Flash-Speicher auf, wobei der E²PROM emuliert wird. Diese Ausgestaltung des Steuergeräts weist zwar den Vorteil auf, dass ein Austausch der Speicherbausteine zuverlässig verhindert werden kann, allerdings sind die Daten bei der Emulation des E²PROM nur blockweise überschreibbar.

Das Verfahren zum Schutz gegen Manipulation erfolgt bei diesem Steuergerät mit internem Speicher im wesentlichen wie das oben für Steuergeräte mit externen Speichern beschriebene. Auch hierbei können insbesondere die Daten des E²PROM verschlüsselt abgelegt werden und durch einen Schlüssel, der zumindest eine individuelle Kennung des Steuergeräts, wie die µC-ID und/oder die Flash-ID umfasst, entschlüsselt werden. Ebenso können die in dem Subcode, der in dem Flash-Speicher des µC abgelegt ist, enthaltenen verschlüsselten Daten oder Fingerprints durch den Mastercode entschlüsselt werden. Auch hierbei wird vorzugsweise eine steuergeräteindividuelle Kennung in dem Schlüssel integriert.

Die Erfindung ist nicht auf die dargestellten Ausführungsformen beschränkt. So kann als Kennung der einzelnen Speicherbausteine beispielsweise das Herstellungsdatum des Steuergeräts in Betracht kommen. Hierdurch kann eine Manipulation während der Garantiezeit verhindert werden.

Das Steuergerät kann im Sinne dieser Erfindung beispielsweise ein Motorsteuergerät, ein Getriebesteuergerät oder auch ein Kombiinstrument darstellen.

Mit einem erfindungsgemäßen Verfahren und dem Steuergerät zum Ausführen des erfindungsgemäßen Verfahrens können gegenüber herkömmlichen Steuergeräten eine große Anzahl von Vorteilen erzielt werden.

Mit dem Steuergerät zum Ausführen des erfindungsgemäßen Verfahrens kann auf zuverlässige Weise ein Austausch einzelner oder mehrerer Bausteine verhindert werden, da durch einen solchen Austausch die Funktion des Steuergeräts verhindert werden kann. Das Auslesen eines für die Funktion der Steuerung zwingend erforderlichen Teils des Programms bzw. der Daten ist nicht möglich, wenn dieser Teil in dem lesegeschützten OTP-Bereich abgelegt ist. Damit kann eine Vervielfältigung der Software verhindert werden. Auch ist der Zugriff auf vertrauliche Daten über die Kontaktierung des Bausteins nicht möglich, wenn diese in dem lesegeschützten OTP-Bereich des µC abgelegt sind. Besonders sicher kann das Steuergerät vor Manipulationen geschützt werden, indem es nur in der Kombination von Master- und Sub-Code lauffähig ist. Eine Veränderung des im reprogrammierbaren, gegebenenfalls externen Speicher, z.B. Flash, abgelegten Sub-Codes führt ohne eine Anpassung des Mastercodes zu einem Steuergeräteausfall. Weiterhin können Daten, die beispielsweise auf einem E²PROM abgelegt sind, steuergeräteindividuell verschlüsselt werden. Auch die Entschlüsselung solcher Daten kann von einer Kennung des Steuergeräts abhängig gemacht werden. Zusätzliche Sicherheit kann dadurch geschaffen werden, dass die Ver- und Entschlüsselung von dem Verbund der einzelnen Bausteine mit den dem µC bekannten ID's abhängig gemacht wird.

Zusammenfassend kann also festgestellt werden, dass durch die gewählte Verschlüsselung der Daten des E²PROMS die Manipulation von Steuergeräten, wie beispielsweise Chip-Tuning bei Motorsteuergeräten zuverlässig vermieden werden kann.

## Patentansprüche

1. Verfahren zum Schutz vor Manipulation eines Fahrzeug-Steuergeräts, wobei das Fahrzeug-Steuergerät (1) zumindest einen Microrechner (µC) mit einer in einem lesegeschützten, one time programmable - Bereich (11) des Microrechners (µC) abgelegten, bausteinindividuellen Identifikationsnummer und mindestens einen reversiblen Festwertspeicher (3) mit einer bausteinindividuellen Identifikationsnummer umfasst, **dadurch gekennzeichnet, dass**
in den reversiblen Festwertspeicher (3) Daten abgelegt werden, die durch eine steuergeräteindividuelle Verschlüsselung mit Hilfe eines symmetrischen Schlüssels verschlüsselt worden sind, wobei der Schlüssel zumindest aus der bausteinindividuellen Identifikationsnummer des reversiblen Festwertspeichers (3) des Fahrzeug-Steuergerätes, in dem die verschlüsselten Daten abgelegt sind, und der bausteinindividuellen Identifikationsnummer des Microrechners (µC) des Fahrzeug-Steuergerätes (1) gebildet wird und der Schlüssel in einem RAM-Speicher des Microrechners (µC) des Fahrzeug-Steuergeräts abgelegt wird, so dass der Schlüssel bei jedem Hochlaufen des Fahrzeug-Steuergerätes (1) neu gebildet wird.

2. Verfahren nach Anspruch 1, **dadurch gekennzeichnet, dass** die Identifikationsnummern des reversiblen Festwertspeichers (3) aus einem lesegeschützten, one time programmable - Bereich (11) des Fahrzeug-Steuergeräts (1) ausgelesen wird.

## Claims

1. Method for protecting against the manipulation of a vehicle controller, the vehicle controller (1) comprising at least one microcomputer (µC) having a module-specific ID number stored in a read-protected, one-time-programmable region (11) of the microcomputer (µC) and at least one reversible read-only memory (3) having a module-specific ID number, **characterised in that** data are stored in the reversible read-only memory (3) which have been encrypted by controller-specific encryption using a symmetric key, the key being formed at least from the module-specific ID number of the reversible read-only memory (3) of the vehicle controller, in which the encrypted data are stored, and from the module-specific ID number of the microcomputer (µC) of the vehicle controller (1), and the key is stored in a random access memory of the microcomputer (µC) of the vehicle controller, so that the key is reformed upon each start-up of the vehicle controller (1).

2. Method according to claim 1, **characterised in that** the ID numbers of the reversible read-only memory (3) are read out of a read-protected, one-time-programmable region (11) of the vehicle controller (1).

## Revendications

1. Procédé de protection contre une manipulation d'un appareil de commande de véhicule, dans lequel l'appareil de commande de véhicule (1) comprend au moins un micro-ordinateur (µC) avec un numéro d'identification individualisé protégé en lecture déposé dans une zone (11) du micro-ordinateur (µC) programmable une fois et au moins une mémoire morte réversible (3) avec un numéro d'identification individualisé, **caractérisé en ce que**
dans la mémoire morte réversible (3) sont déposées des données qui ont été codées par un codage individuel de l'appareil de commande à l'aide d'une clé symétrique, dans lequel la clé est formée au moins du numéro d'identification individualisé de la mémoire morte réversible (3) de l'appareil de commande du véhicule, dans laquelle les données codées ont été déposées, et du numéro d'identification individualisé du micro-ordinateur (µC) de l'appareil de commande de véhicule (1) et la clé est déposée dans une mémoire RAM du micro-ordinateur (µC) de l'appareil de commande du véhicule de sorte que la clé soit reformée à chaque fonctionnement plein de l'appareil de commande (1) du véhicule.

2. Procédé selon la revendication 1, **caractérisé en ce que** le numéro d'identification de la mémoire morte réversible (3) est lu dans une zone protégée en lecture programmable une fois (11) de l'appareil de commande (1) du véhicule.
